**Europäisches Patentamt**

**European Patent Office**

**Office européen des brevets**

(11) Veröffentlichungsnummer: **0 271 944**
**A1**

## (12) EUROPÄISCHE PATENTANMELDUNG

(21) Anmeldenummer: **87202343.7**

(22) Anmeldetag: **26.11.87**

(51) Int. Cl.⁴: **B22F 1/02** , B22F 1/00 ,
C04B 38/06 , B01J 2/00

(30) Priorität: **27.11.86 DE 3640586**

(43) Veröffentlichungstag der Anmeldung:
**22.06.88 Patentblatt 88/25**

(84) Benannte Vertragsstaaten:
**BE CH DE FR GB LI NL SE**

(71) Anmelder: **NORDDEUTSCHE AFFINERIE AG**
**Alsterterrasse 2**
**D-2000 Hamburg 36(DE)**

(72) Erfinder: **Der Erfinder hat auf seine Nennung**
**verzichtet**

(74) Vertreter: **Rieger, Harald, Dr.**
**Reuterweg 14**
**D-6000 Frankfurt a.M.(DE)**

(54) **Verfahren zur Herstellung von Hohlkugeln oder deren Verbunden mit Wandungen erhöhter Festigkeit.**

(57) Es wird ein Verfahren zur Herstellung von Hohlkugeln oder Hohlkugelverbunden (Formkörpern) mit Wandungen erhöhter Festigkeit beschrieben, wobei auf metallisierte kugelförmige Leichtkörperteilchen mit einem Kern aus geschäumtem Polymer weitere Schichten aufgetragen werden. Zwecks Erhöhung der Wandfestigkeit der kugelförmigen Teilchen und der Festigkeit des Formkörpers werden metallisierte kugelförmige Leichtkörperteilchen mit einer Metallwanddicke von 5 bis 20 micron mit einer Dispersion von feinteiligem Metall oder dessen Oxid oder feinteiligem keramischem oder feuerfestem Material behandelt (beschichtet), die in einer Stärke von 15 bis 500 micron beschichteten kugelförmigen Leichtkörperteilchen getrocknet, die getrockneten Teilchen auf eine Temperatur von etwa 400°C zur Pyrolyse des Polymerkerns erhitzt und anschließend bei einer Temperatur von 900 bis 1400°C gesintert.

## Verfahren zur Herstellung von Hohlkugeln oder deren Verbunden mit Wandungen erhöhter Festigkeit

Die Erfindung betrifft ein Verfahren zur Herstellung von Hohlkugeln oder deren Verbunden bzw. geformten Körpern, ausgehend von metallischen, im wesentlichen kugelförmigen Leichtkörperteilchen.

Aus DE-PS 32 10 770 ist ein Verfahren zur Herstellung von metallischen, im wesentlichen kugelförmigen Leichtkörperteilchen durch naßchemische Metallisierung von Kunststoffteilchen bekannt. Nach dem vorbekannten Verfahren werden Schaumstoffteilchen, wie marktgängige Schaumstoffgranulatteilchen, stromlos mit z.B. Kupfer oder Nickel metallisiert und die Kunststoffkerne pyrolytisch bei Temperaturen von etwa 400°C zersetzt. Des weiteren können die Teilchenwandungen elektrolytisch auf Dicken bis zu 0,05 mm verstärkt werden. Die metallischen, kugelförmigen Leichtkörperteilchen sind zur Herstellung von Formkörpern durch Sinterung vorgeschlagen. Des weiteren sind die vorbekannten Metallhohlkugeln vorgeschlagen zur Herstellung von Formkörpern, bei denen in einer Matrix aus gieß-oder - schüttfähigen Stoffen oder einer Matrix aus plastischen oder erhärtenden Stoffen Metallhohlkugeln eingebaut sind. Dabei können die Metallhohlkugeln miteinander kommunizieren, indem die Kontaktstellen der einzelnen Kugeln geöffnet sind, oder die Metallhohlkugeln liegen separat oder mehr oder weniger dicht gepackt in der Matrix vor.

Der Erfindung liegt die Aufgabe zugrunde, ein Verfahren zur Herstellung von Metallhohlkugeln oder Strukturen aus Metallhohlkugelverbunden (Formkörper) mit Wandungen erhöhter Festigkeit und Stabilität bereitzustellen. Ein weiteres Ziel der Erfindung ist es, Metallhohlkugelverbunde bzw. Strukturen mit Wandungen erhöhter Festigkeit bereitzustellen, wobei diese Festigkeit sowohl bei dicht gesinterten als auch insbesondere bei porösen Wandungen gewährleistet ist und eine oberflächenreiche leichte Zellenstruktur großer Festigkeit mit im wesentlichen kugelförmigen Kernzellen geschaffen wird.

Zur Lösung der Aufgabe geht die Erfindung aus von einem Verfahren zur Herstellung von Hohlkugeln oder Hohlkugelverbunden mit Wandungen erhöhter Festigkeit, wobei auf metallisierte, im wesentlichen kugelförmige Leichtkörperteilchen mit einem Kern aus geschäumtem Polymer weitere Schichten aufgetragen werden.

Ausgehend von einem Verfahren der genannten Art besteht das Verfahren gemäß der vorliegenden Erfindung darin, daß metallisierte kugelförmige Leichtkörperteilchen mit einer Metallwanddicke von 5 bis 20 micron mit einer Dispersion von feinteiligem Metall oder dessen Oxid oder feinteiligem keramischem oder feuerfestem Material behandelt (beschichtet), die in einer Stärke von 15 bis 500 micron beschichteten kugelförmigen Leichtkörperteilchen getrocknet, die getrockneten Teilchen auf eine Temperatur von etwa 400°C zur Pyrolyse des Polymerkerns erhitzt und anschließend bei einer Temperatur von 900 bis 1400°C gesintert werden.

Mit dem Verfahren der Erfindung werden Leichtkörperteilchen erhöhter Eigenfestigkeit bzw. Druckfestigkeit erzielt, und es werden auch durch Auswahl der dispergierten Teilchen der Dispersion nach Art und Korngröße Leichtkörperwandungen poröser oder dicht gesinterter Beschaffenheit erzielt. Dabei bleibt die im wesentlichen kugelförmige Gestalt des Leichtkörperteilchens einzeln oder im Verbund erhalten. Je nach Auswahl können nicht nur poröse oder dicht gesinterte Wandungen erzeugt werden, sondern es kann gleichzeitig auch ein Kommunizieren der ursprünglichen, im wesentlichen kugelförmigen Kernzellen an ihren Kontaktstellen bewirkt werden, d.h. es liegt eine Struktur von kugelförmigen Zellen mit Makroporen und mit Mikroporen vor.

Naoh dem Verfahren der Erfindung werden im allgemeinen Leichtkörperwandungen mit Mikroporen erzielt, wenn die Korngröße der dispergierten Teilchen etwa zwischen 0,04 und 0,3 mm liegt. Dichte gesinterte Wandungen werden erreicht, wenn die Korngröße der dispergierten Teilchen unter 0,04 mm und etwa zwischen 0,0001 und 0,01 mm liegt. Als Sinterhilfen eignen sich hierbei beispielsweise CaO, $SiO_2$, MgO, $Y_2O_3$. Diese hochschmelzenden Oxide bilden mit vielen Keramikwerkstoffen wie Aluminiumoxid, Zirkonoxid niedrigschmelzende Mischkristalle und ermöglichen damit einen Sintervorgang mit flüssigen Phasen.

Zur Durchführung des erfindungsgemäßen Verfahrens wird zweckmäßig von einer Dispersion der Teilchen ausgegangen. Das Dispergiermittel ist vorzugsweise Wasser, kann aber auch ein organisches Lösungsmittel oder eine Mischung dieser Stoffe sein. Es ist von Vorteil, wenn die Dispersion ein organisches Bindemittel enthält, das rückstandsfrei verbrennbar ist. Hierdurch wird die Beschichtung der primären Metallhohlkugeln mit insbesondere gröberen Teilchen hinsichtlich Haftung erleichtert, wie aber auch ein mehrfacher Beschichtungsvorgang verbessert wird. Die Konzentration der Dispersion beträgt im allgemeinen 40 bis 50 Gew.-%, bezogen auf Beschichtungsteilchen. Bei spritzfähigen Dispersionen (Teilchengröße 0,1 bis 50 micron) wird die Beschichtung der Metallhohlkugeln zweckmäßig im Wirbelbett vorgenommen. Die Dauer des Eindüsens der Dispersion bestimmt dabei die Wanddicke. Selbstverständlich kann man auch mehrfach und unterschiedliche Schichten aufsprühen. Das organische Bindemittel kann auch separat auf die primären Metallhohlkugeln aufgetragen werden, wobei die Schichtstärke maximal 0,01 mm beträgt. Das Beschichten der Metallhohlkugeln mit gröberen Teilchen, beispielsweise zur Herstellung von Strukturen mit Filtereigenschaften, wird zweckmäßigerweise durch Einstäuben der zuvor mit Bindemittel versehenen Metallhohlkugeln vorgenommen. Beim Mischen derart vorbehandelter Hohlkugeln mit heißem Pulver gröberer Teilchen umhüllen sich die Hohlkugeln innerhalb weniger Sekunden mit einer Monoschicht aus Grobpulver. Dieser Beschichtungsvorgang kann mehrfach wiederholt und ein Mehrschichtenauftrag erzeugt werden. Geeignete Bindemittel sind beispielsweise Polyäthylen (LDPE), Acrylharze, Polyvinylbutyrale.

Als Beschichtungsmaterialien eignen sich metallische oder nichtmetallische Werkstoffe. Für metallische Werkstoffe werden üblicherweise Dispersionen eines oder mehrerer Metalle oder Oxide der Metalle aus der Gruppe Fe, Cu, Ni, Cr, W oder Ta, insbesondere Eisen, Kupfer oder Nickel, verwendet. Im Falle der Verwendung der Oxide dieser Metalle muß in der Sinterstufe des Verfahrens in reduzierender Atmosphäre gesintert werden. Während des Sintervorgangs legiert sich in jedem Falle das primäre Wandungsmetall der Metallhohlkugel mit dem Metall der Beschichtung. Als Endprodukt entsteht nach der Sinterung beispielsweise ein mit Kupfer legierter Stahl oder z.B. korrosionsbeständige Kupfer/Nickel-Legierungen, jeweils in Schwammstruktur niedrigen Raumgewichts bei hoher Festigkeit. Derartige Schwammstrukturen aus mit Kupfer legiertem Stahl oder mit Kupfer legiertem Nickel dienen beispielsweise der Herstellung plattenförmiger Körper für Filter, poröse Elektroden, Schallschluck-und Stoßverzehrelemente sowie zur Herstellung von Leichtbauplatten.

Zur Herstellung von mit nichtmetallischen Stoffen beschichteten Metallhohlkugeln werden zweckmäßig Dispersionen von keramischen bzw. feuerfesten Werkstoffen eingesetzt, gegebenenfalls wiederum unter Verwendung eines organischen Bindemittels. Geeignete Materialien sind beispielsweise Tonminerale, hochschmelzende Oxide, feuerfeste Silikate; beispielsweise Aluminiumoxid, Magnesiumoxid, Titandioxid, Kaolin, Zirkonsilikat; ferner Carbide, wie Siliciumcarbid, Titancarbid; Nitride, wie Aluminiumnitrid; Silicide, wie Molybdänsilicid; ferner Aluminiumphosphat und andere Materialien.

Die beschichteten metallisierten Leichtkörperteilchen werden sodann, gegebenenfalls nach mehrfach vorgenommener Beschichtung, getrocknet und die getrockneten Leichtkörperteilchen zur Pyrolyse des Zellkerns in an sich bekannter Weise auf etwa 400°C erhitzt und anschließend bei einer Temperatur von etwa 900 bis 1400°C gesintert. Hierbei entstehen je nach Teilchengröße, Art und Sintertemperatur des nichtmetallischen Werkstoffes dichte oder poröse Beschichtungen. Sofern die Sinterung der beschichteten metallisierten Leichtkörperteilchen in einer Form vorgenommen wird, entstehen Formkörper aus gesinterten und im wesentlichen kugelförmigen Zellen mit entweder porösen oder mehr oder weniger dicht gesinterten Zellwandungen. Das Metall der primären metallisierten Leichtkörperteilchen sammelt sich im Inneren der Zellen und kann, sofern es nicht mechanisch ausgeschleudert ist, durch Behandlung mit Mineralsäure entfernt werden.

Im Ergebnis liegen in den nach dem erfindungsgemäßen Verfahren hergestellten Produkten Formkörper mit offenzelliger Schwammstruktur vor, wobei die Wandungen (Schalen) der Zellen eines Verbundes mehr oder weniger dicht gesinterte Schalen aus Metall oder keramischem Material, wie $Al_2O_3$, sind und wobei die Kernzellen an den Berührungsstellen miteinander kommunizieren; oder es liegt nach dem Sintern ein Kugelverband mit porösen Schalen aus gesintertem Metall oder keramischem Material vor, quasi eine dreidimensionale Siebstruktur, bestehend aus miteinander verbundenen sphärischen Siebkäfigen.

Ein nach dem erfindungsgemäßen Verfahren hergestellter Formkörper ist somit gekennzeichnet durch 15 bis 500 micron starke Zellwände erhöhter Festigkeit aus gesinterten Partikeln aus keramischem oder feuerfestem Material oder aus Metallpartikeln, die durch das primäre Wandmetall legiert sind, wobei die Schwammstruktur aus einem Verbund von gegebenenfalls kommunizierenden, im wesentlichen kugelförmigen Kernzellen (konvexen Schalenzellen) und zwischen den Kernzellen liegenden konkav-sphärischen kommunizierenden Zellen (konkaven Schalenzellen) besteht, und wobei die Zellwände (Schalen) porös oder dicht gesintert sind.

Die nach dem erfindungsgemäßen Verfahren unter Verwendung von Metallhohlkugeln und einem Beschichtungsmaterial definierten Kornspektrums hergestellten Formkörper eignen sich in besonderer Weise zur Herstellung von stabilen, druckfesten Filtern für Gase und Flüssigkeiten, insbesondere für Hochtemperaturfiltration, zur Herstellung von porösen Elektroden, Schallschluck-und Stoßverzehrelementen sowie zur Herstellung von Leichtbauplatten.

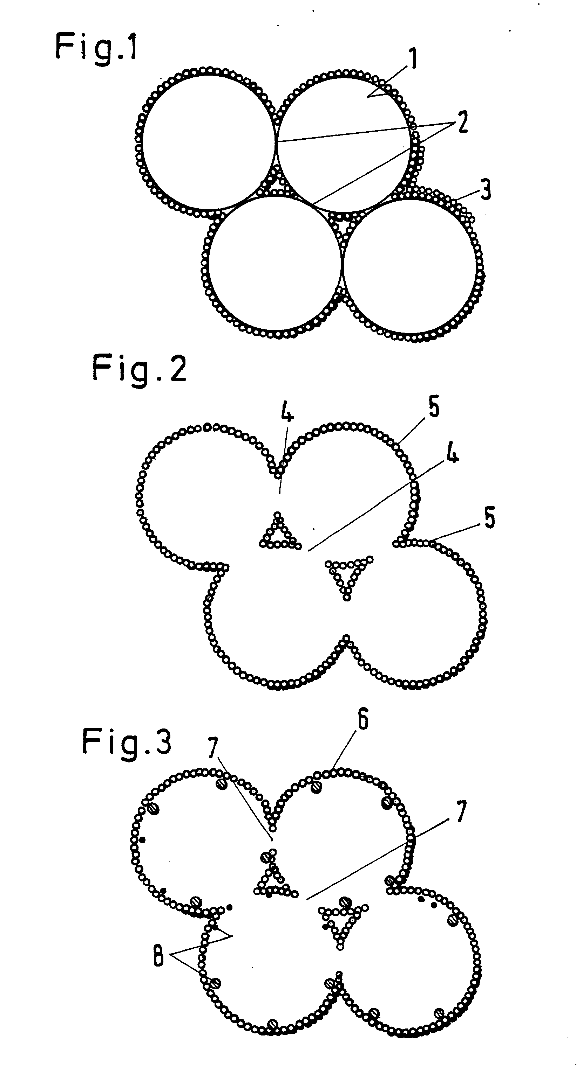

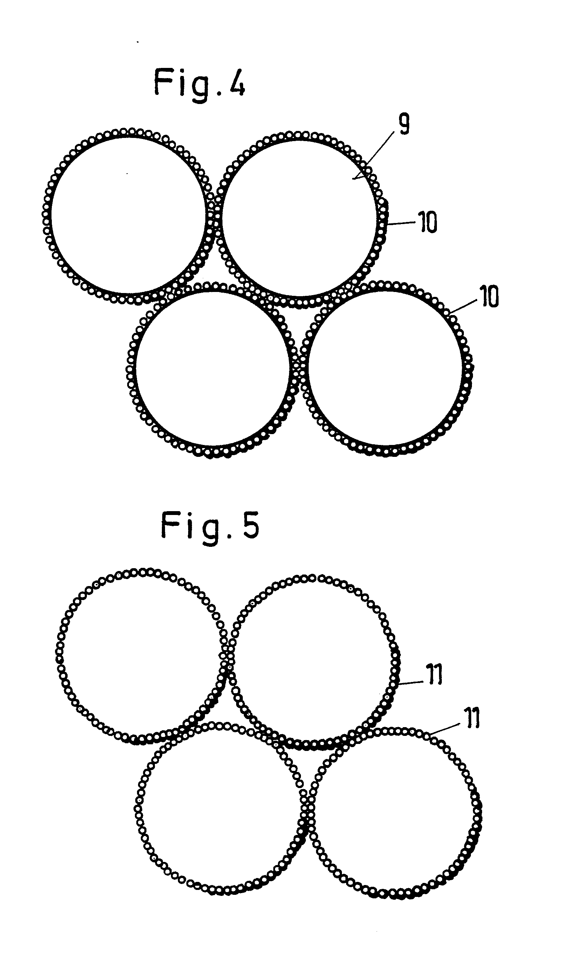

Die Erfindung wird anhand schematischer Abbildungen in den Figuren 1 bis 10 und anhand von Ausführungsbeispielen näher und beispielhaft erläutert.

Fig. 1 zeigt in vorgrößerter Darstellung im Schnitt einen Verband von metallisierten Hohlkugeln vor dem Sinterprozeß, deren Metallschalen (1) aus z.B. Kupfer sich an den Kontaktpunkten (2) berühren und die mit Partikeln (3), z.B. Nickel, beschichtet sind.

Fig. 2 stellt den Verband metallisierter und mit Partikeln beschichteter Metallhohlkugeln nach dem Sintervorgang dar. Beispielsweise ist aus einer mit Nickelpartikeln beschichteten Kupferhohlkugel eine poröse Zellwand (5) aus einer Kupfer/Nickel-Legierung entstanden, und die Zellen stehen untereinander über Kontaktöffnungen (4) in Verbindung.

Fig. 3 zeigt, nach dem Sintervorgang, einen Verband von mit z.B. Al$_2$O$_3$ beschichteten, z.B. Kupfer-oder Nickelhohlkugeln. Die Zellwände (6) aus Al$_2$O$_3$-Partikeln sind porös gesintert und die beim Sinterprozeß geschmolzenen Metallschalen aus z.B. Cu oder Ni sind zu Kügelchen (8) in den Zellen geschmolzen. Die Zellen stehen untereinander durch die Öffnungen (7) in Kontakt.

Fig. 4 zeigt einen Verband von Metallhohlkugeln (9) aus z.B. Kupfer, die mit einer Schicht aus Metallpulver (10), z.B. Nickel, überzogen sind, vor dem Sintervorgang.

Fig. 5 zeigt den Verband der Metallhohlkugeln der Fig. 4 nach dem Sinterprozeß, wobei sich poröse, feste Kugelschalen bzw. Zellwände (11) aus Partikeln einer Kupfer/Nickel-Legierung gebildet haben.

Fig. 6 zeigt ein einzelnes Leichtkörperteilchen, dessen kugelförmiger Kern (12) aus einem geschäumten Polymer, wie geschäumtes Polystyrol, mit einer Metallschicht (14) aus z.B. Kupfer oder Nickel in einer Schichtdicke von 5 bis 20 $\mu$ überzogen ist. Mit (13) ist eine etwa 50 bis 100 $\mu$ starke Beschichtung aus sinterfähigem Metall oder aus dessen Oxid bezeichnet.

Fig. 7 zeigt eine Schüttung der Leichtkörperteilchen der Figur 6 vor der Pyrolyse und vor dem Dichtsintern. Die Beschichtungen (13) aus z.B. Nickel-oder Eisenpulver haben Berührungskontakt in den Bereichen (13a).

Fig. 8 zeigt die Schüttung gemäß Figur 7 nach der Pyrolyse und nach dem Sinterprozeß. Aus den Schichten (13, 14) sind dicht gesinterte Schalen (15) aus einem Legierungsmetall (Cu/Ni, Cu/Fe oder Ni/Fe) entstanden, die über Sinterbrücken (16) miteinander verbunden sind.

Fig. 9 zeigt vor dem Sinterprozeß eine Schüttung von Metallhohlkugeln (19), deren Wandungen (18) aus z.B. Nickel oder Kupfer mit einer Schicht (19) aus z.B. Al$_2$O$_3$-Pulver überzogen sind. Die Berührungskontakte der Metallhohlkugeln sind mit (20) bezeichnet.

Fig. 10 zeigt die Schüttung gemäß Figur 9, jedoch nach dem Sinterprozeß. Mit (21) ist eine dicht gesinterte, kompakte Schicht bzw. Zellwand aus z.B. Aluminiumoxid bezeichnet, wobei die Berührungskontakte der Zellwände (21) zu Kontaktlöchern bzw. Zellendurchgängen (22) erweitert sind. Die während des Sinterns geschmolzenen Metallkügelchen (23) aus z.B. Nickel oder Kupfer der ursprünglichen Metallhohlkugel befinden sich im Innern der Zelle an der Zellwand (21).

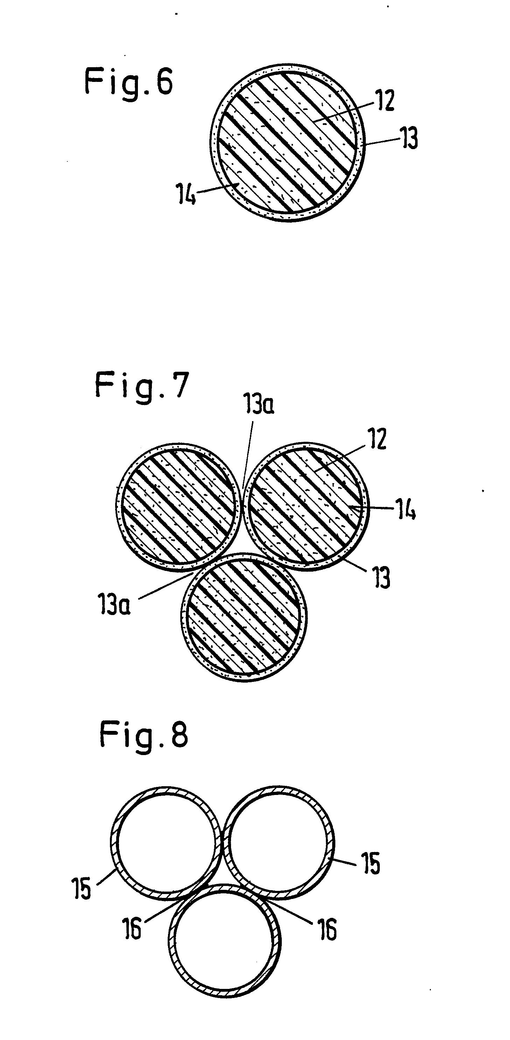

Zur Herstellung von Leichtkörperteilchen gemäß Figur 6 werden metallisierte Schaumpolymerkugeln eines Durchmessers von 1 bis 10 mm, wie mit Kupfer oder Nickel beschichtete Kugeln aus geschäumtem Polystyrol, in einem Wirbelbettaggregat mit einer organisches Bindesmittel enthaltenden, wäßrigen Dispersion eines sinterfähigen Metalls oder dessen Oxid behandelt und das beschichtete und getrocknete Produkt abgezogen. In gleicher Weise kann auch ein pyrolysiertes Produkt, d.h. eine Metallhohlkugel eingesetzt werden.

Zur Herstellung von Formkörpern hoher Festigkeit gemäß Figuren 7 und 8 werden Leichtkörperteilchen der vorstehend beschriebenen Art in eine entsprechende Form eingebracht und durch Rütteln verdichtet, ggf. wird ein leichter Druck ausgeübt, damit die Kugeln in guten Berührungskontakt treten. Anschließend wird die gefüllte Form, sofern noch Schaumpolymer in der Metallhohlkugel enthalten ist, auf etwa 400 bis 600°C erhitzt und das Polymer pyrolysiert. Anschließend wird die Form auf eine Temperatur von 900 bis 1400°C erhitzt und der Formkörper gesintert. Hierbei werden an den Berührungspunkten der Kugeln Sinterbrücken geschaffen. Wird die Metallhohlkugel bzw. das Leichtkörperteilchen mit Metallpulver, wie Kupfer, beschichtet, erfolgt Beschichtung und Sinterung des Formkörpers unter Schutzgas. Bei einer Beschichtung mit dem Oxid des entsprechenden Metalls, wie Nickeloxid, kann die Beschichtung zunächst in Gegenwart von Luft erfolgen. Dabei bildet sich z.B. eine Schicht aus oxidischem Kupfer und oxidischem Nickel aus. Diese wird anschließend unter reduzierenden Bedingungen in eine Kupfer/Nickel-Legierungsschicht umgewandelt.

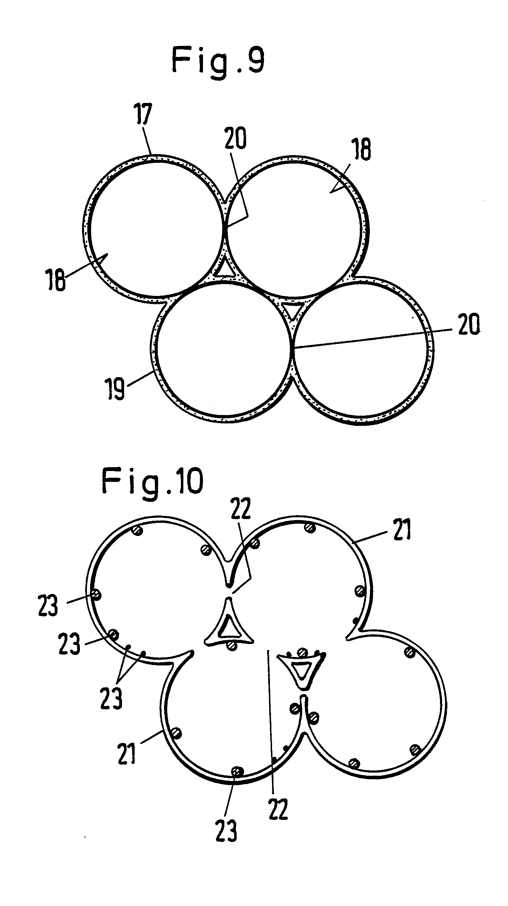

Zur Herstellung von Formkörpern hoher Festigkeit gemäß Figuren 9 und 10 in Gestalt einer offenzelligen keramischen Schwammstruktur werden metallisierte Schaumpolymerkugeln, z.B. mit Kupfer beschichtete Kugeln aus geschäumtem Polystyrol, in eine ggf. siebartige Form eingebracht und durch Rütteln verdichtet. Hierauf wird die Form mit einer Dispersion aus keramischem Material, wie Kaolin-Schlicker, gefüllt bzw. die Form in eine derartige Dispersion eingetaucht und anschließend die überschüssige Dispersion ablaufen gelassen. Hierbei bildet sich eine filmartige Beschichtung (19) aus, wie in Figur 9 schematisch dargestellt. Anschließend wird die Form mit Inhalt bei 105°C getrocknet. Hierbei erreicht der Formkörper eine ausreichende Grünfestigkeit, so daß er der Form entnommen, und der Pyrolyse sowie einer Dichtsinterung bei 900 bis 1400°C unterzogen werden kann. Das zu Kugeln oder zu kleinen Reguli geschmolzene Metall der ursprünglichen Kugelwand wird durch Behandlung des Körpers mit Mineralsäure entfernt.

## Ansprüche

1. Verfahren zur Herstellung von Hohlkugeln oder Hohlkugelverbunden (Formkörpern) mit Wandungen erhöhter Festigkeit, wobei auf metallisierte kugelförmige Leichtkörperteilchen mit einem Kern aus geschäumtem Polymer weitere Schichten aufgetragen werden, dadurch gekennzeichnet,

daß metallisierte kugelförmige Leichtkörperteilchen mit einer Metallwanddicke von 5 bis 20 micron mit einer Dispersion von feinteiligem Metall oder dessen Oxid oder feinteiligem keramischem oder feuerfestem Material behandelt (beschichtet), die in einer Stärke von 15 bis 500 micron beschichteten kugelförmigen Leichtkörperteilchen getrocknet, die getrockneten Teilchen auf eine Temperatur von etwa 400°C zur Pyrolyse des Polymerkerns erhitzt und anschließend bei einer Temperatur von 900 bis 1400°C gesintert werden.

2. Verfahren nach Anspruch 1, dadurch gekennzeichnet,

daß die Dispersion ein rückstandsfrei verbrennbares organisches Bindemittel enthält.

3. Verfahren nach den Ansprüchen 1 bis 2, dadurch gekennzeichnet,

daß die Dispersion eines oder mehrere Metalle oder Oxide der Metalle aus der Gruppe Fe, Cu, Ni, Cr, W oder Ta enthält.

4. Verfahren nach den Ansprüchen 1 bis 2, dadurch gekennzeichnet,

daß die Dispersion eine Substanz aus der Gruppe der keramischen oder feuerfesten Werkstoffe enthält.

5. Verfahren nach den Ansprüchen 1 bis 4, dadurch gekennzeichnet,

daß die dispergierten Teilchen eine Korngröße von etwa 0,1 bis 500 micron aufweisen.

6. Verfahren nach den Ansprüchen 1 bis 5, dadurch gekennzeichnet,

daß die beschichteten und getrockneten Leichtkörperteilchen in eine Form eingerüttelt, in der Form bei einer Temperatur von etwa 400°C pyrolysiert und anschließend durch Erhöhung der Temperatur auf 900 bis 1400°C gesintert werden.

7. Verfahren nach den Ansprüchen 1, 2 und 4 bis 7, dadurch gekennzeichnet,

daß aus den Zellen der Sinterstruktur aus keramischem oder feuerfestem Material das geschmolzene primäre Metall der Metalhohlkugel durch Behandlung mit Säure entfernt wird.

8. Formkörper mit offenzelliger Schwammstruktur, hergestellt nach dem Verfahren der Ansprüche 1 bis 7, gekennzeichnet durch

15 bis 500 micron starke Zellwände erhöhter Festigkeit aus gesinterten Partikeln aus keramischem oder feuerfestem Material oder aus Metallpartikeln, die durch das primäre Wandmetall legiert sind, wobei die Schwammstruktur aus einem Verbund von gegebenenfalls kommunizierenden, im wesentlichen kugelförmigen Kernzellen (konvexen Schalenzellen) und zwischen den Kernzellen liegenden konkav-sphärischen kommunizierenden Zellen (konkaven Schalenzellen) besteht, und wobei die Zellwände (Schalen) porös oder dicht gesintert sind.

# Fig.1

# Fig.2

# Fig.3

# Fig. 4

9

10

10

# Fig. 5

11

11

Fig.6

Fig.7

Fig.8

# Fig.9

# Fig.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 119 913 (C.E.A.)<br>* Ansprüche 1,6,8,12,14; Seiten 18-21; Beispiele 1-4 *<br>--- | 1-8 | B 22 F 1/02<br>B 22 F 1/00<br>C 04 B 38/06<br>B 01 J 2/00 |
| Y,D | DE-A-3 210 770 (M. JAECKEL)<br>* Ansprüche 1-17 *<br>--- | 1-8 | |
| Y | FR-A-1 266 824 (GENERAL ELECTRIC)<br>* Insgesamt *<br>--- | 1,6 | |
| Y | DE-A-3 227 726 (KOMBINAT VEB ELEKTRONISCHE BAUELEMENTE)<br>* Anspruch 1 *<br>----- | 7 | |

RECHERCHIERTE SACHGEBIETE (Int. Cl.4)

B 22 F

Der vorliegende Recherchenbericht wurde für alle Patentansprüche erstellt

| Recherchenort | Abschlußdatum der Recherche | Prüfer |
|---|---|---|
| DEN HAAG | 25-02-1988 | SCHRUERS H.J. |